(19) **Europäisches Patentamt / European Patent Office / Office européen des brevets**

(11) **EP 2 662 804 B1**

(12) **EUROPEAN PATENT SPECIFICATION**

(45) Date of publication and mention
of the grant of the patent:
**09.08.2017 Bulletin 2017/32**

(51) Int Cl.:
***G06K 9/00*** *(2006.01)*

(21) Application number: **13167119.0**

(22) Date of filing: **08.05.2013**

(54) **Method and apparatus for detecting continuous road partition**

Verfahren und Vorrichtung zur Erkennung einer Straßenteilung

Procédé et appareil permettant de détecter la partition de route continue

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2012 CN 201210147642**

(43) Date of publication of application:
**13.11.2013 Bulletin 2013/46**

(73) Proprietor: **Ricoh Company, Ltd.**
**Tokyo 143-8555 (JP)**

(72) Inventors:
- **Liu, Dianchao**
  Haidian District, Beijing 100044 (CN)
- **Liu, Yuan**
  Haidian District, Beijing 100044 (CN)
- **Liu, Tong**
  Haidian District, Beijing 100044 (CN)
- **Shi, Zhongchao**
  Haidian District, Beijing 100044 (CN)
- **Wang, Gang**
  Haidian District, Beijing 100044 (CN)

(74) Representative: **Maury, Richard Philip**
**Marks & Clerk LLP**
**90 Long Acre**
**London WC2E 9RA (GB)**

(56) References cited:
- **ZHENCHENG HU; FRANCISCO LAMOSA; KEIICHI UCHIMURA: "A Complete U-V-Disparity Study for Stereovision Based 3D Driving Environment Analysis", PROCEEDINGS OF THE FIFTH INTERNATIONAL CONFERENCE ON 3-D DIGITAL IMAGING AND MODELING, 2005, XP002727286,**
- **BASAM MUSLEH ET AL: "U-V Disparity Analysis in Urban Environments", 1 January 2012 (2012-01-01), COMPUTER AIDED SYSTEMS THEORY EUROCAST 2011, SPRINGER BERLIN HEIDELBERG, BERLIN, HEIDELBERG, PAGE(S) 426 - 432, XP019172395, ISBN: 978-3-642-27578-4 * figures 2-4 * * p.427, section 2 - p.430, section 3 ***
- **Pierre Charbonnier ET AL: "Stereovision applied to road scene analysis", Bulletin des Laboratoires des Ponts et Chaussées, 272 (2008), 1 November 2008 (2008-11-01), pages 57-73, XP055095663, Retrieved from the Internet: URL:http://perso.lcpc.fr/tarel.jean-philip pe/publis/jpt-bl08.pdf [retrieved on 2014-01-10]**
- **SOON KWON, JONG-HUN LEE, IN-TAE NA, HONG JUNG: "On-road Obstacle Detection and Tracking System Using Robust Global Stereo Vision Method", SPIE, SIGNAL AND DATA PROCESSING OF SMALL TARGETS, vol. 7698, 16 April 2010 (2010-04-16), pages 1-12, XP040535126, DOI: 10.1117/12.852755**
- **GAO Y ET AL: "U-V-Disparity based Obstacle Detection with 3D Camera and steerable filter", INTELLIGENT VEHICLES SYMPOSIUM (IV), 2011 IEEE, IEEE, 5 June 2011 (2011-06-05), pages 957-962, XP031998935, DOI: 10.1109/IVS.2011.5940425 ISBN: 978-1-4577-0890-9**

EP 2 662 804 B1

- NICOLAS SOQUET ET AL: "Road Segmentation Supervised by an Extended V-Disparity Algorithm for Autonomous Navigation", INTELLIGENT VEHICLES SYMPOSIUM, 2007 IEEE, IEEE, PI, 1 June 2007 (2007-06-01), pages 160-165, XP031126938, ISBN: 978-1-4244-1067-5
- JUN ZHAO ET AL: "Detection of non-flat ground surfaces using V-Disparity images", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 4584-4589, XP031580567, ISBN: 978-1-4244-3803-7

- LABAYRADE R ET AL: "Real time obstacle detection in stereovision on non flat road geometry through V-disparity representation", INTELLIGENT VEHICLE SYMPOSIUM, 2002. IEEE JUN 17-21, 2002, PISCATAWAY, NJ, USA,IEEE, vol. 2, 17 June 2002 (2002-06-17), pages 646-651, XP010635896, ISBN: 978-0-7803-7346-4

**Description**

**BACKGROUND OF THE INVENTION**

**1. Field of the Invention**

The present invention generally relates to image processing, and specifically, a method and an apparatus for detecting a continuous road partition.

**2. Description of the Related Art**

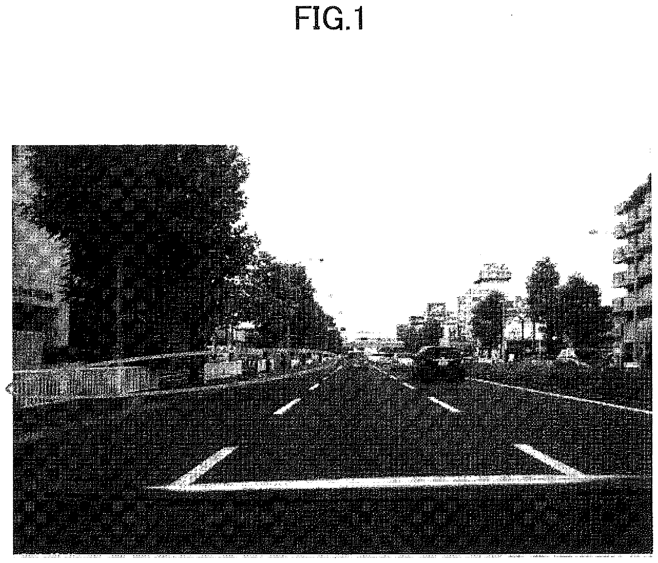

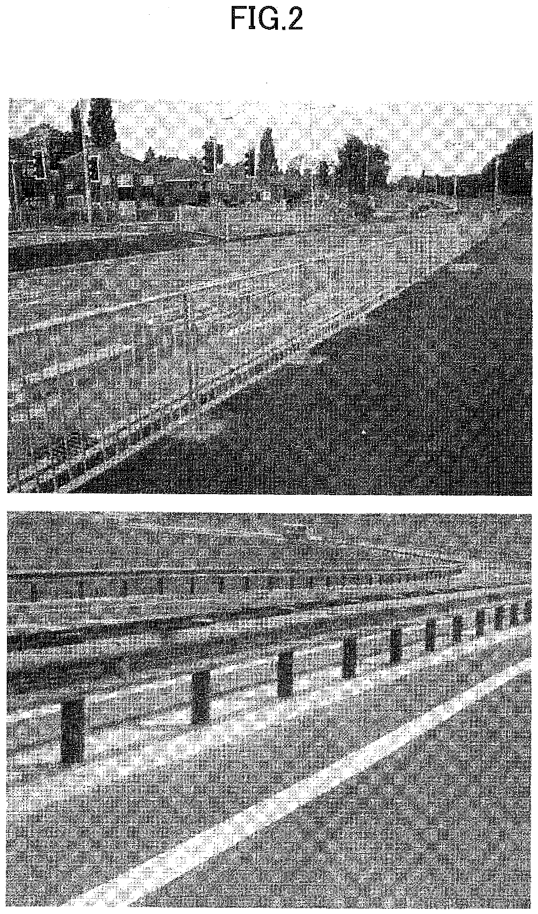

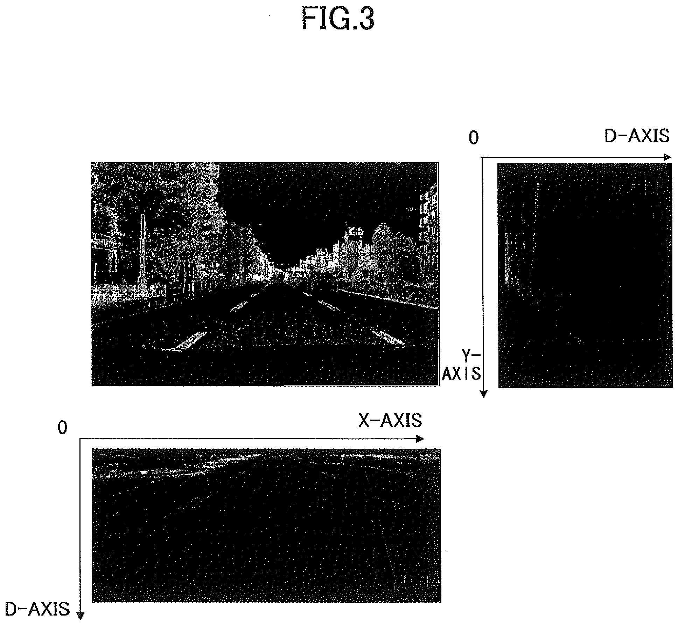

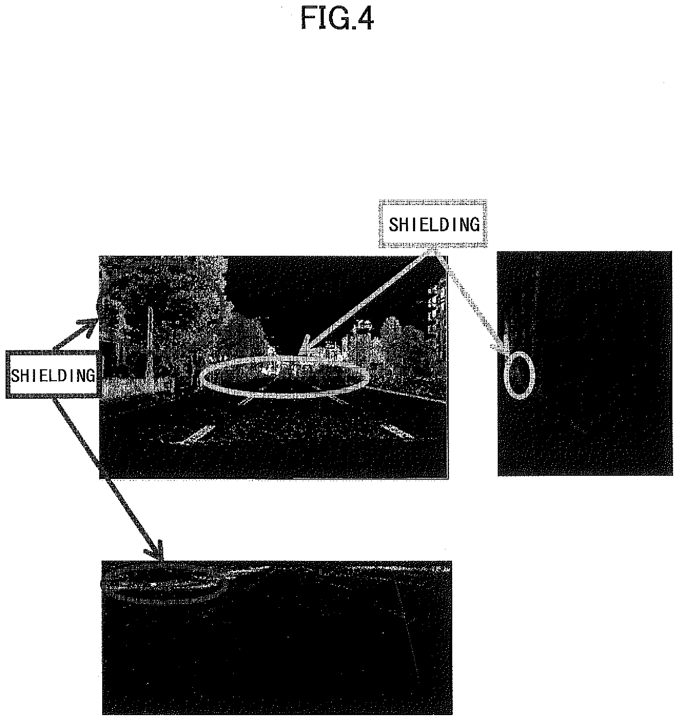

The driving assistance system is becoming more popular. The LDW/RDW (Lane/Road detection warning) system, a subsystem of the driving assistance system, can avoid collisions and help to determine driving directions accurately. A road or lane detection is very important for the LDW/RDW system, because only by knowing road information can a further process such as warning be performed. In general, a road or a lane is detected by detecting road partitions.
The road partitions include road shoulders, white lines, fences and other objects by which a road area and lanes can be identified.
In the road partitions, there are continuous road partitions with a certain height such as fences, bushes and road shoulders.
With respect to the continuous road partitions, existing detecting methods are generally classified into two types according to the types of processing images.
The first type of detecting method is performed according to the grey-scale map based on the edge, the color, the texture or other features of the grey-scale map. Some methods thereof can detect the object by combining object information obtained by other sensors and a grey-scale image.
For example, in the non-patent document 1 ("Vehicle and Guard Rail Detection Using Radar and Vision Data Fusion", Giancarlo Alessandretti, Alberto Broggi, and Pietro Cerri, et al., IEEE 2007 TRANSACTIONS ON INTELLIGENT TRANSPORTATION SYSTEMS), a method for detecting a vehicle and a fence according to radar imaging and vision imaging is disclosed. In this method, positioning of a target area is performed and the detection is performed by a grey-scale map.
In the first type of detecting method, the detection is performed based on a grey-scale map, and is greatly affected by the environmental conditions such as the light intensity or color change and the visual geometric deformation; so that, the detection is unstable during the actual implementation. For example, FIG. 1 illustrates an example of a grey-scale map with a fence part, and the fence part is illustrated by an oval-shaped box. FIG. 2 illustrates examples of different grey-scale maps under the variation of various factors such as light, the background and the visual geometric deformation. It is clear that the form of the grey-scale map is greatly affected by the environment and the geometric deformation, therefore the detection result is also greatly affected.
The other type of method is detecting an object according to a disparity map obtained by a stereoscopic camera.
For example, in the non-patent document 2 ("A Complete U-V-Disparity Study for Stereovision Based 3D Driving Environment Analysis", Zhencheng Hu, Francisco Lamosa and Keiichi Uchimura, Proceedings of the Fifth International Conference on 3-D Digital Imaging and Modeling 2005), a method for partitioning an object based on a U-disparity map and a V-disparity map is disclosed. In this method, calculations of a U-disparity map and a V-disparity map are performed, and then a line detection is performed according to the U-disparity map and the V-disparity map. At last, the line segments within the U-disparity map and the V-disparity map that have the same disparity value are regarded as the same object because the detected line segments may be a surface of the object, thereby realizing the object partition.
The second type of the method has a problem of the shelter (the object is hidden by something). Because the U-disparity map and the V-disparity map are maps of accumulative disparity values of the disparity map in the x-direction and the y-direction, respectively, the problems of the shelters in horizontal and vertical directions inherently exist. FIG. 3 illustrates a disparity map having a fence part, a corresponding U-disparity map and a corresponding V-disparity map. FIG. 4 illustrates cases of the fence part hidden by some parts in the U-disparity map and V-disparity map.
Therefore, there is a demand for providing a technology that can solve not only the problems of environmental change and geometric deformation but also the problem of the shelters in vertical and horizontal directions.

**SUMMARY OF THE INVENTION**

The present invention is made in light of the above problems, and is in the method of claim 1 and the apparatus of claim 9.
According to an aspect of the present invention, a method for detecting a continuous road partition with a height comprises: a step of obtaining a disparity map including a part of the continuous road partition, a corresponding U-disparity map and a corresponding V-disparity map; and a step of detecting the continuous road partition based on the U-disparity map corresponding to a slice parallel to the ground.

In the method for detecting a continuous road partition, if a slice perpendicular to the ground is obtained from the disparity map in the position of a straight line detected from the U-disparity map as the continuous road partition, a verification may be performed according to the V-disparity map corresponding to the slice based on a property of the continuous road partition in the V-disparity map.

The method for detecting a continuous road partition may further comprise: a step of detecting a plurality of connected line segments having different slopes from the U-disparity map corresponding to the slice parallel to the ground so as to detect a curved continuous road partition.

According to another aspect of the present invention, a method for detecting a continuous road partition with a height may comprise the steps of:

(1) obtaining a disparity map including the part of the continuous road partition, a corresponding U-disparity map and a corresponding V-disparity map;

(2) obtaining a slant line that is the ground from the V-disparity map, and an intersection point of the slant line that is the ground and the vertical axis $(0,v0)$;

(3) obtaining a slant line passing through the intersection point $(0,v0)$ from the V-disparity map, as a slice parallel to the ground;

(4) obtaining the disparity map and the U-disparity map that correspond to the slice;

(5) detecting a straight line from the U-disparity map, as a candidate continuous road partition;

(6) obtaining another slant line as another slice parallel to the ground in an order from lowest to highest height above the ground, namely, in an order from lowest to highest of the slant line passing through the intersection point $(0,v0)$ in the V-disparity map;

(7) detecting a straight line from another U-disparity map corresponding to another slice, as a candidate continuous road partition;

(8) repeating the steps (6) and (7), until none of the straight lines detected from the preceding U-disparity maps can be found in the last U-disparity map corresponding to the last slice; and

(9) determining a straight line having the most number of overlapping occurrences among the straight lines detected from the U-disparity maps as the continuous road partition, and determining the height of the continuous road partition based on the ground and the last slice.

According to another aspect of the present invention, an apparatus for detecting a continuous road partition with a height may comprise: a disparity map and U-disparity map and V-disparity map obtaining unit for obtaining a disparity map including a part of the continuous road partition, a corresponding U-disparity map and a corresponding V-disparity map; and a detecting unit for detecting the continuous road partition based on the U-disparity map corresponding to a slice parallel to the ground.

According to another aspect of the present invention, a method for detecting a continuous object with a height may comprise: a step of obtaining a disparity map including the continuous object, a corresponding U-disparity map and a corresponding V-disparity map; and a step of detecting the continuous object based on the U-disparity map corresponding to a horizontal slice or the V-disparity map corresponding to a vertical slice.

According to another aspect of the present invention, an apparatus for detecting a continuous object with a height may comprise: a unit for obtaining a disparity map including the continuous object, a corresponding U-disparity map and a corresponding V-disparity map; and a unit for detecting the continuous object based on the U-disparity map corresponding to a horizontal slice or the V-disparity map corresponding to a vertical slice.

According to the method and the apparatus for detecting the continuous road partition with a height according to the embodiment of the present invention, the disparity map, and the U-disparity map or the V-disparity map are used, therefore problems of environmental change and geometric deformation can be solved successfully.

According to the method and the apparatus for detecting the continuous road partition with a height according to the embodiment of the present invention, a three-dimensional object is cut by a slice and the object is detected from a U-disparity map or a V-disparity map of the slice, therefore a problem that an object is hidden in a vertical direction or a horizontal direction can be solved. For example, in cases where a fence is detected, auxiliary information such as white lines, roadsides, trees and buildings can be removed from a map of a horizontal slice parallel to the ground, thereby avoiding the shelters in the horizontal or vertical direction.

According to the method and the apparatus for detecting the continuous road partition with a height according to the embodiment of the present invention, after a positioning or detection is performed according to the U-disparity map or V-disparity map of a slice in a first direction, a further verification or detection may be performed according to the V-disparity map or U-disparity map by obtaining a slice in a second direction perpendicular to the first direction; therefore, the problem of shelters can be further solved, thereby detecting the object accurately.

Furthermore, according to the method and the apparatus for detecting the continuous road partition with a height according to the embodiment of the present invention, a curved line is detected from a corresponding slice image by fitting straight lines, accordingly, the detection of a object curved in a continuous or extending direction can be realized.

## BRIEF DESCRIPTION OF THE DRAWINGS

FIG. 1 is a schematic drawing illustrating an example of a grey-scale map with a fence part;
FIG. 2 is a schematic drawing illustrating examples of different grey-scale maps under the variation of various factors such as the light, the background and the visual geometric deformation;
FIG. 3 is a schematic drawing illustrating a disparity map having a fence part, a corresponding U-disparity map and a corresponding V-disparity map;
FIG. 4 is a schematic drawing illustrating cases of the fence part hidden by some parts in the U-disparity map and V-disparity map;
FIG. 5 is an overall flowchart illustrating the method for detecting the continuous road partition with a height according to one embodiment of the present invention;
FIG. 6 is a schematic drawing, where the upper-left drawing illustrates a slice parallel to the ground in the disparity map, the upper-right drawing illustrates a V-disparity map corresponding to the slice of the disparity map, and the lower-left drawing illustrates a corresponding U-disparity map;
FIG. 7 is a schematic drawing illustrating parts of a slant line that is the ground and a slice parallel to the ground;
FIG. 8 is a flowchart illustrating the method for detecting the continuous road partition with a height by more than one slice parallel to the ground that intersect the disparity map according to one embodiment;
FIG. 9 is a schematic drawing illustrating examples of a first slant line of a first slice and a second slant line of a second slice parallel to the ground in the V-disparity map, respectively;
FIG. 10 is a flowchart illustrating the method for detecting the continuous road partition with a height according to the second embodiment;
FIG. 11 is a schematic drawing, where the upper-left drawing illustrates a form of a slice perpendicular to the ground in the disparity map, the lower-left drawing illustrates the position of, for example, a fence detected from the U-disparity map after steps S310 and S320 of FIG. 10, and the upper-right drawing illustrates a V-disparity map of a cutting plane perpendicular to the ground;
FIG. 12 is a schematic drawing illustrating a case of two fences detected from the U-disparity map;
FIG. 13 is a block diagram illustrating an overall configuration of the apparatus for detecting the continuous object with a height according to one embodiment of the present invention; and
FIG. 14 is an overall hardware block diagram illustrating a system for detecting the continuous object with a height according to the embodiment of the present invention.

## DETAINED DESCRIPTION OF THE PREFERRED EMBODIMENTS

In the following, embodiments of the present invention are described with reference to the accompanying drawings, so as to facilitate the understanding of the present invention.
The embodiments of the present invention will be described in the following order:

1. Glossary and Introduction of Essential Concepts
2. the First Embodiment

2.1. the First Example of the Method for Detecting the Continuous Road Partition With a Height
2.2. the Second Example of the Method for Detecting the Continuous Road Partition With a Height
2.3. the Third Example of the Method for Detecting the Continuous Road Partition With a Height

3. the Second Embodiment
4. the Third Embodiment
5. the Fourth Embodiment
6. Overall Configuration of the Apparatus for Detecting the Continuous Object With a Height
7. System Hardware Configuration
8. Summary

<1. Glossary and Introduction of Essential Concepts>

Before the detailed description, the glossary relating to the present specification will be introduced as follows.

"Slice parallel to the ground" and "from lowest to highest height above the ground", etc., in the present specification mean that the slice parallel to ground and from lowest to highest height above the ground from the standpoint of the real three-dimensional world, except for a specific designation.

In the present specification, "slice" means a plane for cutting the real three-dimensional world (here, slice is also called "cutting plane") so as to obtain sections of objects of the three-dimensional world. The slice may have a thickness. The direction of the slice may be horizontal, vertical or any direction as needed.

"Continuous road partition with a height" means an object that has a certain height based on the ground, extends along the direction of the road and has a function for partitioning the road, for example, a fence at a roadside, a bush or a wall. It should be noted that the height of the object may not be a fixed height, and the objects may also not have the same height.

"Slice intersects disparity map" means that a virtual slice intersects the three-dimensional world represented as the disparity map.

The essential concepts relating to the present specification will be introduced as follows, so as to facilitate the understanding of the present invention.

Disparity indicates an angle made by two straight lines that are drawn from opposite ends of a base line to a distant object. In general, it means a direction difference generated by looking at the same object from two points having a certain separation distance. The angle that is generated by looking at the two points from the object is called a disparity angle of the two points, and the distance between the two points is called a basic line. A distance between the object and an observer can be calculated as long as the disparity angle and length of the basic line are known.

A disparity map is an image that is based on a reference image, the size of the disparity, and the size of the reference image; and an element value of the disparity map is a disparity value. The disparity map includes distance information of a scene. The disparity map may be calculated from left and right images picked up by a binocular camera or calculated from a depth map of a stereogram.

The coordinates of a point of a common disparity map are represented as (x,y,d), where x is abscissa and v is ordinate; d is the disparity of the point (x,y).

The V-disparity map may be regarded as a side view of the disparity map and the U-disparity map may be regarded as a top view of the disparity map vividly, so as to facilitate the understanding. The V-disparity map or U-disparity map may be calculated from the disparity map. The grey level of any point (d,y) of a V-disparity map is the number of the points of the corresponding disparity map where the ordinate is y and the disparity value is equal to d. The grey level of any point (x,d) of a U-disparity map is the number of the points of the corresponding disparity map where the abscissa is x and the disparity value is equal to d.

Taking a fence as an example, the method for detecting the continuous road partition with a height according to the embodiment of the present invention is described as follows.

<2. the First Embodiment>

<2.1. the First Example of the Method for Detecting the Continuous Road Partition With a Height>

The total process of the first example of the method for detecting the continuous road partition with a height according to one embodiment of the present invention is described as follows.

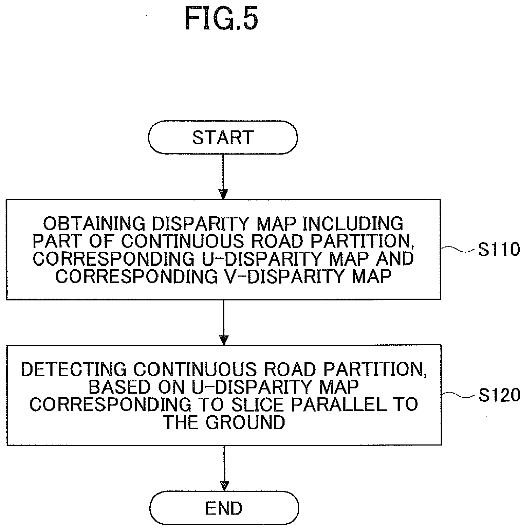

FIG. 5 is an overall flowchart illustrating the method for detecting the continuous road partition with a height according to one embodiment of the present invention.

As illustrated in FIG. 5, in step S110, a disparity map including the part of the continuous road partition, a corresponding U-disparity map and a corresponding V-disparity map are obtained.

Any existing method for obtaining the disparity map can be used in the present invention. For example, the disparity map including the part of the continuous road partition may be obtained by picking-up and calculating by a binocular camera, a multi-camera, or a stereoscopic camera; specifically, for example, a left image and a right image may be picked up by a binocular camera, and the disparity map may be calculated based on the left image and the right image. Or the disparity map may be obtained from a depth map that is obtained from a stereo image. After the disparity is obtained, the corresponding U-disparity map and the corresponding V-disparity map are obtained by converting the disparity map.

In step S120, the continuous road partition is detected based on the U-disparity map corresponding to a slice parallel to the ground.

If objects within a three-dimensional world are cut by a slice parallel to the ground in the three-dimensional world corresponding to the disparity map, all of the points of the objects that intersect are located in the same plane parallel to the ground; therefore, the slice can only intersect the objects with a height within a range by selecting the height of the slice properly. For example, in cases where a fence is detected, the slice is selected within a value range of a general fence height, thereby making the slice not intersect white lines, roadside stones and buildings on the top; therefore, the information of the slice for processing is greatly reduced and the problem of the shelter in the vertical direction can be solved.

Such a slice parallel to the ground is represented as a straight line in the V-disparity map, because of the characteristic of the V-disparity map that can be regarded as a side view of the disparity map. Moreover, the straight lines within the V-disparity map corresponding to the parallel planes within the disparity map intersect at infinity, namely, a point with a zero disparity. The mathematical expression of the slice parallel to the ground may be obtained by these characteristics of the V-disparity map.

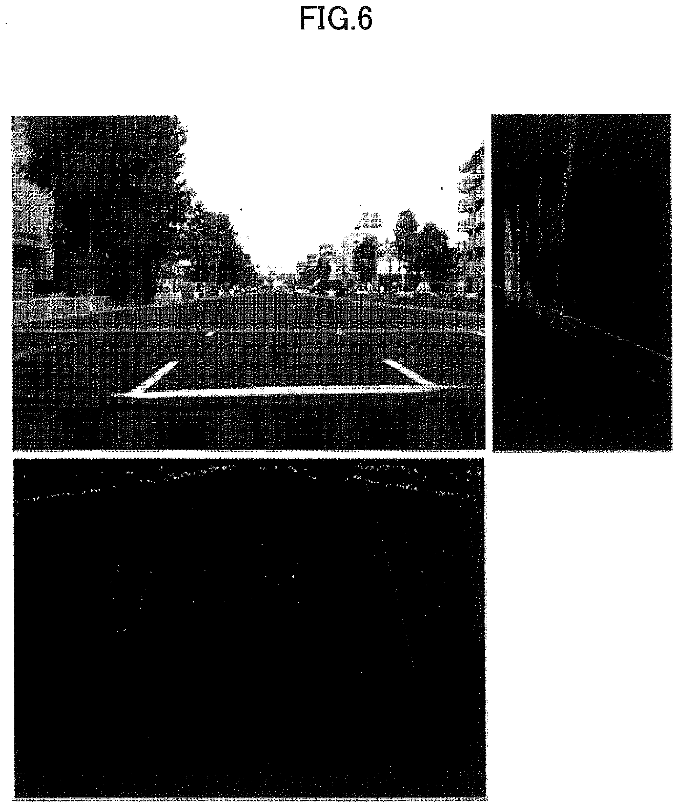

The upper-left drawing of FIG. 6 illustrates a slice parallel to the ground in the disparity map, as illustrated by the gray part, the upper-right drawing of FIG. 6 illustrates the part of a V-disparity map corresponding to the slice of the disparity map, where the straight line corresponds to the horizontal slice within the disparity map, and the lower-left drawing of FIG. 6 illustrates a corresponding U-disparity map, where the fence seems similar to a straight line.

To obtain the U-disparity map corresponding to the slice parallel to the ground, various methods may be used.

One example of the methods may be the following method.

(1) A slant line that is the ground is first obtained from the V-disparity map. In general, the slant line that is the ground, is the lowest slant line in the V-disparity map of FIG. 6 according to the drawing direction of FIG. 6. That is to say, the slant line that is the ground is a straight line with the maximum y-value in the V-disparity map, in cases where the coordinate axes are constructed as illustrated in above FIG. 3, namely, y-axis extends downward from the origin of the coordinates. Therefore, the lowest slant line may be detected as the ground by a method such as Hough transformation (HT) or linear fitting by searching for points. Supposing coordinates of the V-disparity map are defined as (di,yi), a slant line representing the ground may be represented as the following equation (1) :

$$y = k_r \times d + b_r \qquad (1)$$

, where $k_r$ represents the slope, and $b_r$ represents the intercept.

(2) An intersection point of the slant line that is the ground and y-axis, namely, a point with zero disparity value is obtained. Obviously, the point can be represented as $(0, b_r)$. Accordingly, slant lines within the V-disparity map corresponding to all of the slices parallel to the ground may be represented as the following equation (2):

$$y = k_p \times d + b_r \qquad (2)$$

, where $k_p$ represents the slope, and $k_p \in (0, k_r)$ .

(3) A slice parallel to the ground is selected, namely, a straight line i that is represented as

$$y = k_{pi} \times d + b_r \qquad (3)$$

is selected from the V-disparity map, where the slope of the straight line i is represented as $k_{pi}$.

(4) After the straight line i within the V-disparity map is obtained, all coordinate points that meet the straight line (xi, yi,di) may be obtained from the disparity map, and the coordinate points within the disparity map are projected to the U-disparity map, thereby obtaining the U-disparity map corresponding to the slice parallel to the ground.

As described above, in general, the fence extends in a straight line and is represented as a straight line in the U-disparity map; therefore, the fence may be detected by detecting the straight line from the U-disparity map, after the U-disparity map corresponding to the slice parallel to the ground as illustrated in the lower-left drawing of FIG. 6 is obtained. Specifically, noise filtering and straight line enhancement may be first performed by some filters, and the straight line is detected by a line detecting method such as Hough transformation (HT) so as to detect the position of the fence. Additionally, the detected lines may also be filtered by using filters of a certain size or location so as to obtain a correct detection result.

According to the method for detecting a continuous road partition with a height according to the first embodiment of the present invention, the problem that an object is hidden in the vertical direction can be solved by selecting a horizontal plane with a height, and using not the original accumulative image of the U-disparity map or the V-disparity map but an original disparity map within the three dimensional world that corresponds to a disparity map of a cutting plane.

It should be noted that the above method is just an example, and various modifications may be made as needed.

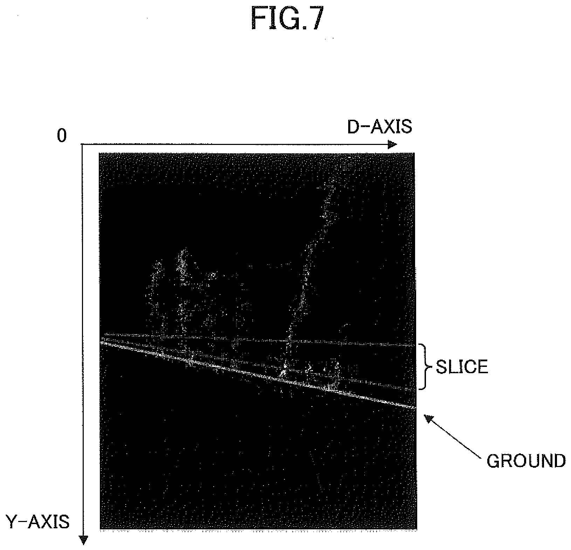

For example, as described above, the slice is a plane parallel to the ground. However, the slice may have a certain thickness. More points within the fence are projected to the U-disparity map by selecting the slice having a certain thickness, thereby reducing the impact of noise more effectively. In a detailed implementation, the slice is represented as a slant line in the V-disparity map that intersects the slant line that is the ground at y-axis, in cases where the slice is a plane parallel to the ground as described above; however, the slice is represented as the part between two slant lines (including the two slant lines) in the V-disparity map, and the two slant lines intersect the slant line that is the ground at the same point on y-axis, in cases where the selected slice is parallel to the ground and has a certain thickness. FIG. 7 is a schematic drawing illustrating the part of the slant line that is the ground and the slice parallel to the ground.

In the above example, the ground is selected as a reference standard and all slices parallel to the ground are obtained. However, this is just an example; a top surface of bushes may be selected as a reference standard and all slices parallel to the top surface of the bushes may be obtained, if the top surface of bushes is known.

<2.2. the Second Example of the Method for Detecting the Continuous Road Partition With a Height>

In the first example of the method for detecting the continuous road partition with a height as described above, one slice parallel to the ground that intersects the disparity map is used; however, an embodiment of detecting the continuous road partition with a height by more than one slice parallel to the ground that intersect the disparity map is described as follows.

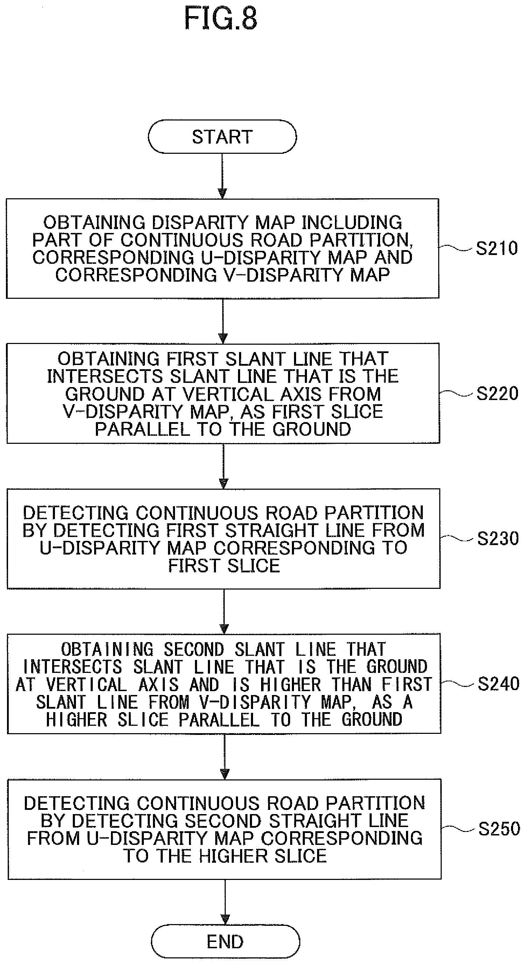

FIG. 8 is a flowchart illustrating the method for detecting the continuous road partition with a height by more than one slice parallel to the ground that intersect the disparity map according to one embodiment.

As illustrated in FIG. 8, in step S210, a disparity map including the part of the continuous road partition, a corresponding U-disparity map and a corresponding V-disparity map are obtained. The detailed implementation of the operation of step S210 may refer to the above description of step S110 in FIG. 5.

In step S220, a first slant line that intersects the slant line that is the ground at the vertical axis, is obtained from the V-disparity map as a first slice parallel to the ground.

In step S230, the continuous road partition is detected by detecting a first straight line from a U-disparity map corresponding to the first slice.

In step S240, a second slant line that intersects the slant line that is the ground at the vertical axis and is higher than the first slant line, is obtained from the V-disparity map as a higher slice parallel to the ground.

In step S250, the continuous road partition is detected by detecting a second straight line from a U-disparity map corresponding to the higher slice.

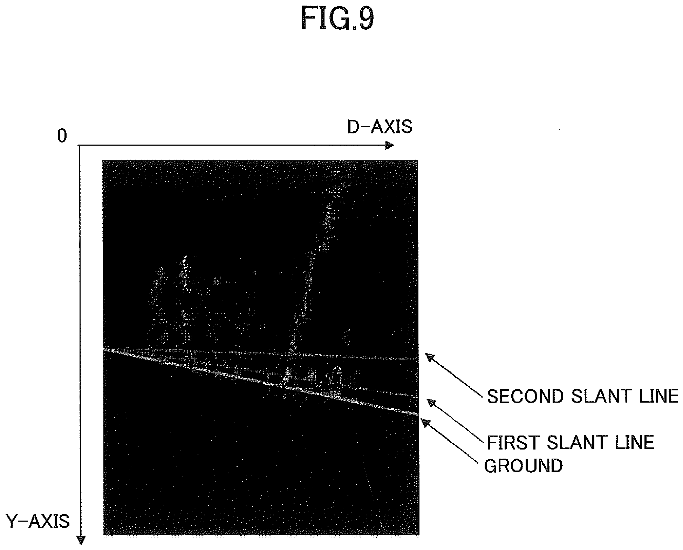

FIG. 9 is a schematic drawing illustrating examples of a first slant line of a first slice and a second slant line of a second slice parallel to the ground in the V-disparity map, respectively. The second slice is relatively higher than the first slice to the ground, namely, the second slant line is higher than the first slant line in the drawing direction of FIG. 9. If a straight line perpendicular to d-axis is drawn and the straight line intersects the slant line that is the ground, the first slant line representing the first slice parallel to the ground and the second slant line representing the second slice parallel to the ground, respectively, for the y-coordinates of the intersection points, the slant line that is the ground is greater than the first slant line and the first slant line is greater than the second slant line (the slant line that is the ground > the first slant line > the second slant line).

After the detected results of the continuous road partitions (they are called the first result and the second result correspondingly) are obtained by detecting the straight lines (they are called the first straight line and the second straight line correspondingly) from the U-disparity maps of the first slice and the slice being higher than the first slice, the results of the continuous road partitions may be further filtered by combining the first result and the second result, for example, overlapping straight lines between the first result and the second result is obtained as the continuous road partitions. It should be noted that "first straight line" ("second straight line") in this case does not mean that the first straight line (the second straight line) just represents one straight line, but means that the first straight line (the second straight line) may represent one or more straight lines.

<2.3. the Third Example of the Method for Detecting the Continuous Road Partition With a Height>

The first and second examples of the method for detecting the continuous road partition with a height are described above. Furthermore, each disparity map of the slice corresponds to a specific height within the three-dimensional world, so that the disparity maps of the slices should intersect the fence within a height range of the fence; therefore, if a series of disparity maps of the slice (disparity slice map) for cutting are used, the position of the fence can be determined from the corresponding U-disparity map, and the height of the fence can also be determined.

Specifically, operations of obtaining a slice parallel to the ground and detecting the continuous road partition by detecting a straight line from a U-disparity map corresponding to the slice are repeated in an order from lowest to highest height above the ground, until no more straight lines can be found as the continuous road partition from a U-disparity map corresponding to a slice. Accordingly, a straight line having the most number of overlapping occurrences among the straight lines detected from the U-disparity maps may be determined as the continuous road partition, and the height of the continuous road partition may be determined based on the ground and the last slice.

With respect to the arrangement of the above slices parallel to the ground, the slices parallel to the ground may have an equal distance or an unequal distance. Accordingly, it will be apparent to those skilled in the art that: if the slices parallel to the ground have an equal distance in a straight line perpendicular to d-axis in the V-disparity map, the slant lines also have an equal distance; and if the slices parallel to the ground have an unequal distance, the slant lines also have an unequal distance, because the characteristic of the distance between parallel surfaces of the disparity map does not deform in the V-disparity map.

With respect to the detection of the continuous road partition, it may be checked whether the result of the slice detection operation matches a previous detection result or not (whether there is an overlapping straight line in the detected straight lines or not) every time the slice detection operation is performed, and it may also be checked whether the detection results of a number of times (such as three times) overlap or not all at once every three times the slice detection operation is performed.

Similarly, all of the slices of every time in this case may be planes or have the same thickness, thereby ensuring a good comparability between the detection results of the slice operations. However, the slices may have different thicknesses as needed, for example, for a requirement of processing speed.

According to the method of the third example, the continuous road partition with a height can be detected robustly by repeating the operations of the slice and the detection.

<3. the Second Embodiment>

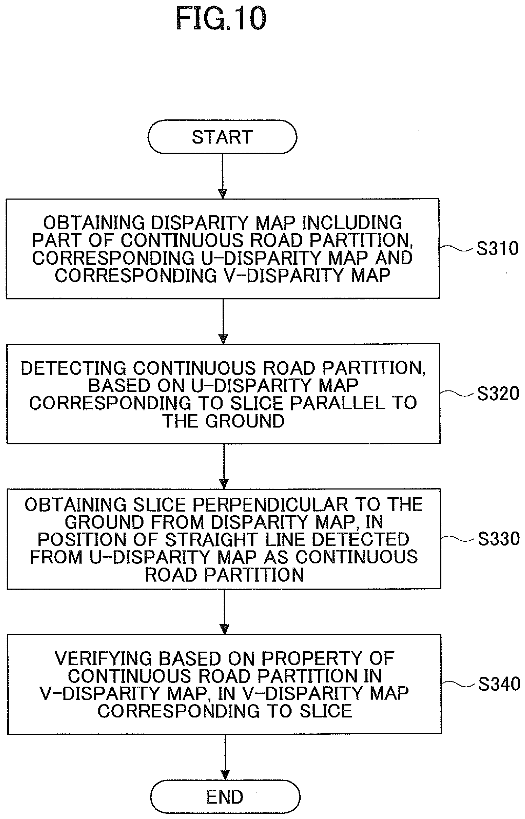

FIG. 10 is a flowchart illustrating the method for detecting the continuous road partition with a height according to the second embodiment.

In contrast to the method of using only the slice parallel to the ground that intersects the disparity map and performing the detection from the U-disparity map corresponding to the slice in the first embodiment, steps S330 and S340 are added into the method of the second embodiment. Because the operations of steps S310 and S320 and steps S110 and S120 illustrated in FIG. 5 are basically the same, descriptions of steps S310 and S320 are omitted here.

As illustrated in FIG. 10, in step S330, after the position of the fence is determined based on the U-disparity map, a slice perpendicular to the ground is obtained from the disparity map.

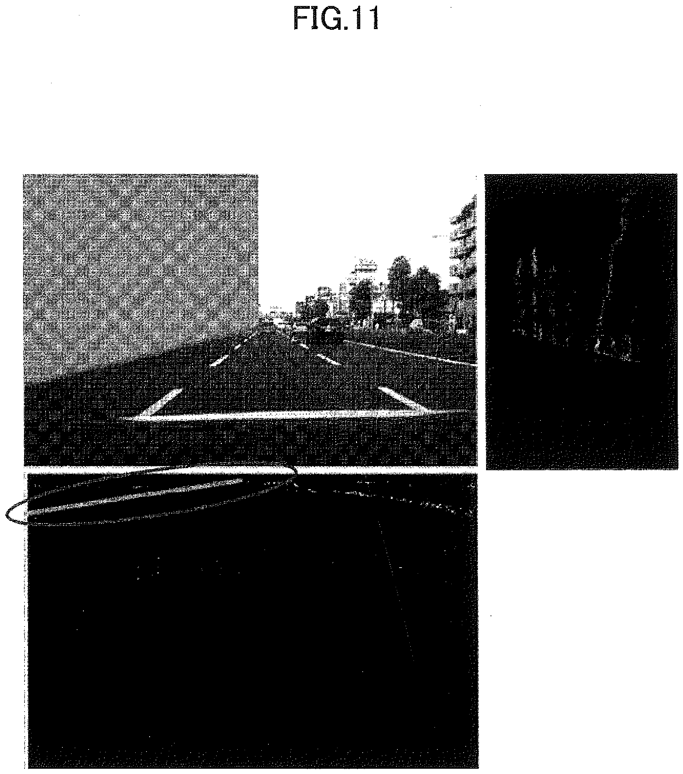

The lower-left drawing of FIG. 11 illustrates the position of, for example, a fence detected from the U-disparity map after steps S310 and S320 (illustrated as an oval-shaped box). As described above, an approximate height of the fence can also be obtained.

The slice perpendicular to the ground is obtained at the above position from the disparity map. The upper-left drawing of FIG. 11 illustrates a form of the slice perpendicular to the ground in the disparity map. As illustrated in lower-left drawing of FIG. 11, the slice is represented in the form of a straight line in the U-disparity map.

The straight line may represented by the following equation (4):

$$d = k_u \times x + b_u \qquad (4)$$

, where $k_u$ represents the slope of the line, and $b_u$ represents the intercept of the line.

In step S340, a verification is performed according to the V-disparity map corresponding to the slice perpendicular to the ground, based on a property of the continuous road partition in the V-disparity map. For example, in cases where a fence is detected, the fence might be represented as upper and lower horizontal lines and a number of vertical lines therebetween, and the upper and lower horizontal lines of the fence are approximately parallel to each other; therefore, the upper and lower horizontal lines intersect approximately at infinity, namely, a point with a zero disparity value or a point on y-axis.

After the operations of the above steps S310 and S320, the straight line in the form of equation (4) is obtained from the U-disparity map. Next, all coordinate points that meet the straight line (xi,yi,di) may be obtained from the disparity map, and the coordinate points within the disparity map are projected to the V-disparity map, thereby obtaining the V-disparity map corresponding to the slice perpendicular to the ground. The upper-right drawing of FIG. 11 illustrates a V-disparity map of a cutting plane perpendicular to the ground.

With respect to the V-disparity map corresponding to the slice, processes such as noise reduction, line enhancement and fence texture processing may be first performed by some basic filtering method, and the fence detection may be further performed by some detection and partition method such as connected area analysis. The detected result may also be filtered by using filters of a certain size or location. However, these filtering and detecting methods are just examples, and the present invention may use any methods for detecting an object from the V-disparity map.

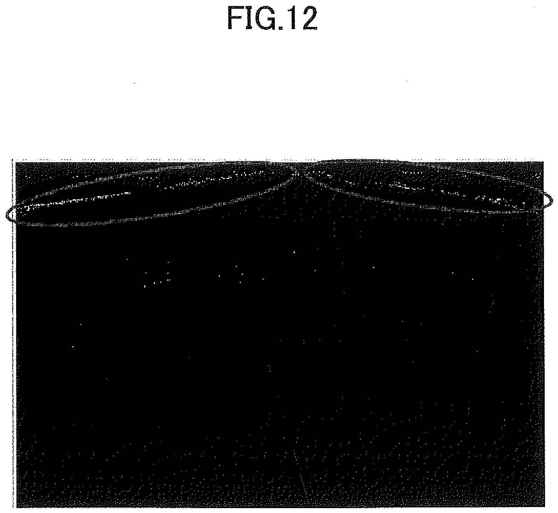

The above fence detecting method is not limited to a method for detecting only one fence, but may detect one or more fences. In cases where a plurality of fences are detected and the plurality of fences are parallel to each other (in most cases), it will be apparent to those skilled in the art that: the plurality of parallel fences are represented as a plurality of straight lines in x-d coordinate system of the U-disparity map, and these parallel planes should intersect at infinity, namely, a vanishing point with a zero disparity value or a point on x-axis. FIG. 12 is a schematic drawing illustrating a case of two fences detected from the U-disparity map, and the fence part is illustrated by an oval-shaped box.

In this case, the slice perpendicular to the ground may be obtained with respect to each candidate fence, and a further detection is performed according to the corresponding V-disparity map.

<4. the Third Embodiment>

Both of the above first and second embodiments describe cases of the detected continuous road partition that is a type of straight line; however, the present invention is not limited to these cases, but may be expanded to a case for detecting a curved continuous road partition. For example, in cases where the direction of some roads have a bend, the continuous road partition such as a fence becomes a form of curved direction accordingly.

Specifically, according to the method for detecting a curved continuous road partition according to the third embodiment of the present invention, the curved continuous road partition can be detected by detecting a plurality of connected line segments having different slopes that fit the curve from the U-disparity map corresponding to the slice parallel to the ground.

<5. the Fourth Embodiment>

The method for detecting the continuous road partition with a height according to the fourth embodiment of the present invention comprises the steps of:

(1) obtaining a disparity map including the part of the continuous road partition, a corresponding U-dasparity map and a corresponding V-disparity map;
(2) obtaining a slant line that is the ground from the V-disparity map, and an intersection point of the slant line that is the ground and the vertical axis (0,v0);
(3) obtaining a slant line passing through the intersection point (0,v0) from the V-disparity map, as a slice parallel to the ground;
(4) obtaining the disparity map and the U-disparity map that correspond to the slice;
(5) detecting a straight line from the U-disparity map, as a candidate continuous road partition;
(6) obtaining another slant line as another slice parallel to the ground in an order from lowest to highest height above the ground, namely, in an order from lowest to highest of the slant lines passing through the intersection point (0, v0) in the V-disparity map;
(7) detecting a straight line from another U-disparity map corresponding to another slice, as a candidate continuous road partition;
(8) repeating the steps (6) and (7), until none of the straight lines detected from the preceding U-disparity maps can be found in the last U-disparity map corresponding to the last slice; and
(9) determining a straight line having the most number of overlapping occurrences among the straight lines detected from the U-disparity maps as the continuous road partition, and determining the height of the continuous road partition based on the detected ground and the last slice.

Preferably, the method for detecting the continuous road partition according to the fourth embodiment of the present invention further comprises the steps of: obtaining the V-disparity map of the continuous road partition, based on the continuous road partition and the height information thereof detected from the U-disparity map; and verifying the continuous road partition according to the V-disparity map, based on a property of the continuous road partition.

In the above methods of the first to fourth embodiment, the detected object is the continuous road partition with a height; however, the present invention is not limited to this, but may be used to detect any continuous objects with a height, so long as a plane slice perpendicular to the height can be obtained. For example, if a wall that is not a road partition is detected, the detection may be performed by a U-disparity map or V-disparity map corresponding to a horizontal slice or vertical slice of the wall. The method for detecting the continuous object comprises: a step of obtaining a disparity map including the continuous object, a corresponding U-disparity map and a corresponding V-disparity map; and a step of detecting the continuous object based on the U-disparity map corresponding to a horizontal slice or the V-disparity map corresponding to a vertical slice.

<6. Overall Configuration of the Apparatus for Detecting the Continuous Object With a Height>

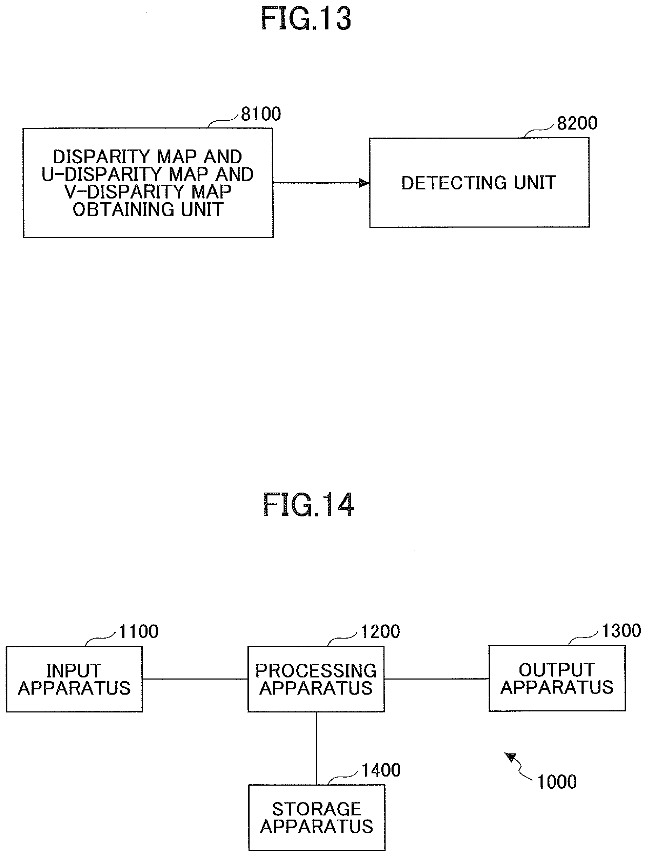

FIG. 13 is a block diagram illustrating overall configuration of the apparatus for detecting the continuous object with a height 8000 according to one embodiment of the present invention.

As illustrated in FIG. 13, the apparatus for detecting a continuous road partition with a height 8000 may comprise: a disparity map and U-disparity map and V-disparity map obtaining unit 8100 for obtaining a disparity map including the part of the continuous road partition, a corresponding U-disparity map and a corresponding V-disparity map; and a detecting unit based on U-disparity map 8200 for detecting the continuous road partition based on the U-disparity map corresponding to a slice parallel to the ground.

Although it is not illustrated in FIG. 13, the apparatus for detecting a continuous road partition 8000 may further comprise a unit for obtaining a slant line that is the ground from the V-disparity map.

The step of detecting the continuous road partition based on the U-disparity map corresponding to the slice parallel to the ground by the detecting unit based on U-disparity map 8200 may further comprise: a step of obtaining a first slant line that intersects the slant line that is the ground at a vertical axis from the V-disparity map as a first slice parallel to the ground; and a step of detecting the continuous road partition by detecting a first straight line from the U-disparity map corresponding to the first slice.

The step of detecting the continuous road partition based on the U-disparity map corresponding to the slice parallel to the ground by the detecting unit based on U-disparity map 8200 may further comprise: a step of obtaining a second slant line that intersects the slant line that is the ground at the vertical axis and is higher than the first slant line from the V-disparity map as a higher slice parallel to the ground; and a step of detecting the continuous road partition by detecting a second straight line from the U-disparity map corresponding to the higher slice.

The step of detecting the continuous road partition based on the U-disparity map corresponding to the slice parallel to the ground by the detecting unit based on U-disparity map 8200 may further comprising: a step of repeating operations of obtaining a slice parallel to the ground and detecting the continuous road partition by detecting a straight line from the U-disparity map corresponding to the slice in an order from lowest to highest height above the ground until no more straight lines can be found as the continuous road partition from the U-disparity map corresponding to a slice, determining a straight line having the most number of overlapping occurrences among the straight lines detected from the U-disparity maps as the continuous road partition accordingly, and determining the height of the continuous road partition based on the ground and the last slice.

Although it is not illustrated in FIG. 13, the apparatus for detecting a continuous road partition 8000 may perform a verification according to the V-disparity map corresponding to the slice perpendicular to the ground based on a property of the continuous road partition in the V-disparity map, if a slice perpendicular to the ground is obtained from the disparity map in the position of a straight line detected from the U-disparity map as the continuous road partition.

The above slice parallel to the ground may have a predetermined thickness.

The detecting unit based on U-disparity map 8200 may further detect a plurality of connected line segments having different slopes from the U-disparity map corresponding to the slice parallel to the ground so as to detect a curved continuous road partition.

<7. System Hardware Configuration>

The present invention may be implemented as a system for detecting the continuous object with a height. FIG. 14 is an overall hardware block diagram illustrating a system for detecting the continuous objet with a height 1000 according to the embodiment of the present invention. As illustrated in FIG. 14, the system for determining the continuous object with a height 1000 may comprise an input apparatus 1100 for inputting relevant images or information such as left and right images picked up by a stereoscopic camera, depth information, or a disparity map of a continuous road partition part, for example, including a keyboard, a mouse, and a communication network and a input device connected thereto, etc.; a processing apparatus 1200 for implementing the above method for detecting the continuous road partition with a height 8000 according to the embodiment of the present invention or being implemented as the above apparatus for detecting the continuous road partition with a height according to the embodiment of the present invention, such as CPU of a computer or other chips having processing ability, etc., that can be connected to a network (not shown) such as the Internet and transmit a processed image to a remote apparatus based on the requirement of processing procedure; an output apparatus 1300 for outputting the result obtained by implementing the continuous road partition detection to the outside, such as a screen, a printer, a communication network and a remote output device connected thereto, etc.; and a storage apparatus 1400 for storing an image, coordinate information of a disparity map, a U-disparity map and a V-disparity map, and an obtained slope and intercept of a slant line relating to the above detection process of the continuous road partition, etc., by a volatile method or a nonvolatile method, such as various kinds of volatile or nonvolatile memory including a random-access memory (RAM), a read-only memory (ROM), a hard disk and a semiconductor memory.

<8. Summary>

According to the embodiment of the present invention, a method for detecting a continuous road partition with a height is provided, and the method may comprise: a step of obtaining a disparity map including the part of the continuous road partition, a corresponding U-disparity map and a corresponding V-disparity map; and a step of detecting the continuous road partition based on the U-disparity map corresponding to a slice parallel to the ground.

The method for detecting a continuous road partition may further comprise: a step of obtaining a slant line that is the ground from the V-disparity map.

In the method for detecting a continuous road partition, the step of detecting the continuous road partition based on the U-disparity map corresponding to the slice parallel to the ground may comprise: a step of obtaining a first slant line that intersects the slant line that is the ground at a vertical axis from the V-disparity map as a first slice parallel to the ground; and a step of detecting the continuous road partition by detecting a first straight line from the U-disparity map corresponding to the first slice.

The step of detecting the continuous road partition based on the U-disparity map corresponding to the slice parallel to the ground may further comprise: a step of obtaining a second slant line that intersects the slant line that is the ground at the vertical axis and is higher than the first slant line from the V-disparity map as a higher slice parallel to the ground; and a step of detecting the continuous road partition by detecting a second straight line from the U-disparity map corresponding to the higher slice.

The method for detecting a continuous road partition may further comprise: a step of repeating operations of obtaining a slice parallel to the ground and detecting the continuous road partition by detecting a straight line from the U-disparity map corresponding to the slice in an order from lowest to highest height above the ground until no more straight lines can be found as the continuous road partition from the U-disparity map corresponding to a slice, determining a straight line having the most number of overlapping occurrences among the straight lines detected from the U-disparity maps as the continuous road partition accordingly, and determining the height of the continuous road partition based on the ground and the last slice.

In the method for detecting a continuous road partition, if a slice perpendicular to the ground is obtained from the disparity map in the position of a straight line detected from the U-disparity map as the continuous road partition, a verification may be performed according to the V-disparity map corresponding to the slice perpendicular to the ground based on a property of the continuous road partition in the V-disparity map.

The above slice parallel to the ground may have a predetermined thickness.

The method for detecting a continuous road partition may further comprise: a step of detecting a plurality of connected line segments having different slopes from the U-disparity map corresponding to the slice parallel to the ground so as to detect a curved continuous road partition.

According to another embodiment of the present invention, a method for detecting a continuous road partition with a height is provided, and the method may comprise the steps of: (1) obtaining a disparity map including the part of the continuous road partition, a corresponding U-disparity map and a corresponding V-disparity map; (2) obtaining a slant line that is the ground from the V-disparity map, and an intersection point of the slant line that is the ground and the vertical axis (0,v0); (3) obtaining a slant line passing through the intersection point (0,v0) from the V-disparity map, as a slice parallel to the ground; (4) obtaining the disparity map and the U-disparity map that correspond to the slice; (5) detecting a straight line from the U-disparity map, as a candidate continuous road partition; (6) obtaining another slant line as another slice parallel to the ground in an order from lowest to highest height above the ground, namely, in an order from lowest to highest of the slant lines passing through the intersection point (0,v0) in the V-disparity map; (7) detecting a straight line from another U-disparity map corresponding to another slice, as a candidate continuous road partition; (8) repeating the steps (6) and (7), until none of the straight lines detected from the preceding U-disparity maps can be found in the last U-disparaty map corresponding to the last slice; and (9) determining a straight line having the most number of overlapping occurrences among the straight lines detected from the U-disparity maps as the continuous road partition, and determining the height of the continuous road partition based on the ground and the last slice.

The method for detecting the continuous road partition according to another embodiment of the present invention may further comprise the steps of: obtaining the V-disparity map of the continuous road partition, based on the continuous road partition and the height information thereof detected from the U-disparity map; and verifying the continuous road partition according to the V-disparity map, based on a property of the continuous road partition.

According to another embodiment of the present invention, an apparatus for detecting a continuous road partition with a height is provided, and the apparatus may comprise: a disparity map and U-disparity map and V-disparity map obtaining unit for obtaining a disparity map including the part of the continuous road partition, a corresponding U-disparity map and a corresponding V-disparity map; and a detecting unit based on U-disparity map for detecting the continuous road partition based on the U-disparity map corresponding to a slice parallel to the ground.

According to another embodiment of the present invention, a method for detecting a continuous object with a height is provided, and the method may comprise: a step of obtaining a disparity map including the continuous object, a corresponding U-disparity map and a corresponding V-disparity map; and a step of detecting the continuous object based on the U-disparity map corresponding to a horizontal slice or the V-disparity map corresponding to a vertical slice.

According to another embodiment of the present invention, an apparatus for detecting a continuous object with a height is provided, and the apparatus may comprise: a unit for obtaining a disparity map including the continuous object, a corresponding U-disparity map and a corresponding V-disparity map; and a unit for detecting the continuous object based on the U-disparity map corresponding to a horizontal slice or the V-disparity map corresponding to a vertical slice.

According to the method and the apparatus for detecting the continuous road partition with a height according to the embodiment of the present invention, a three-dimensional object is cut by a slice and the object is detected from a U-disparity map or a V-disparity map of the slice, therefore a problem that an object is hidden in a vertical direction or a horizontal direction can be solved. For example, in cases where a fence is detected, auxiliary information such as white lines, roadsides, trees and buildings can be removed from a map of a horizontal slice parallel to the ground, thereby avoiding the shelters in the horizontal or vertical direction.

According to the method and the apparatus for detecting the continuous road partition with a height according to the embodiment of the present invention, after a positioning or detection is performed according to the U-disparity map or V-disparity map of a slice in a first direction, a further verification or detection may be performed according to the V-disparity map or U-disparity map by obtaining a slice in a second direction perpendicular to the first direction; therefore, the problem of shelters can be further solved, thereby detecting the object accurately.

Furthermore, according to the method and the apparatus for detecting the continuous road partition with a height according to the embodiment of the present invention, a curved line is detected from a corresponding slice image by fitting straight lines, accardingly, the detection of an object curved in a continuous or extending direction can be realized.

The above description of the embodiments is just for describing the present invention, and various modifications and replacements may be made without departing from the scope of the present invention by persons skilled in the art.

For example, as described above, the U-disparity map and the V-disparity map are obtained by calculating from the disparity map. However, it will be apparent that the U-disparity map and the V-disparity map may be obtained by picking up left and right images by a special camera such as a binocular camera, a multi camera, a stereoscopic camera and calculating directly, or by calculating from a depth map of a stereogram directly.

Furthermore, the obtainment of the U-disparity map and the V-disparity map should be considered in the broad sense. That is to say, it is not limited to that: it is considered that the U-disparity map and the V-disparity map have been obtained only when a complete image is obtained in a general sense; but it may be considered that the U-disparity map and the V-disparity map have been obtained, so long as a calculating operation based on the characteristic of the U-disparity map and the V-disparity map exists.

As another example, the direction of a fence is described in the above embodiments as the technology of the present invention; however, the present invention is not limited to this, but may be applied to a detection of any continuous road partition with a height such as bushes and road shoulders. Specifically, in actuality, the present invention is also not limited to the detection of the continuous road partition, but may be applied to a detection of any continuous object with a height (here, the height may be not a height with respect to the ground). More specifically, the present invention may be applied to a detection of any object in which a repeating slices in a direction thereof have the similarity, so long as a U-disparity or V-disparity map of the slices have the similarity.

Additionally, in the above embodiment, in general, the ground is selected as a reference standard and all slices parallel to the ground are obtained. However, this is just an example; namely, a reference surface is not limited to the ground but may be an appropriate reference surface. For example, a top surface of a vehicle may be selected as the reference surface and all slices parallel to the top surface of the vehicle may be obtained, if the top surface of the vehicle is known. Furthermore, if a slice is obtained in another direction such as a direction perpendicular to the ground, a determined plane in the direction may also be selected as the reference standard and all slices parallel to the plane are obtained.

The basic principle of the present invention is described above with reference to the embodiments. Any one or all of the steps or units of the method or apparatus according to the present invention may be implemented by hardware, software or their combination in any one of computing devices (including a processor, a storage medium, etc.) or a network of computing devices, and it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

The present invention is not limited to the specifically disclosed embodiments, and various modifications and replacements may be made without departing from the scope of the present invention as claimed.

**Claims**

1.  A method for detecting a continuous road partition that is an object with a function for partitioning a road, the continuous road partition having a height based on the ground in a real three-dimensional world and extending along the direction of the road, the method comprising:

    a step of obtaining a disparity map including a part of the continuous road partition, a corresponding U-disparity map and a corresponding V-disparity map; and
    a step of obtaining a straight line in the V-disparity map, which corresponds to a slice parallel to the ground in a real three-dimensional world;
    a step of obtaining a U-disparity map corresponding to the slice parallel to the ground as a slice U-disparity map, and
    a step of detecting the continuous road partition by detecting a straight line from the slice U-disparity map;

    **characterized in that**
    the step of obtaining a straight line in the V-disparity map, which corresponds to a slice parallel to the ground in a real three-dimensional world, comprises:

    detecting a straight line with the maximum ordinate value in the V-disparity as a slant line that is the ground, and detecting a straight line that intersects the slant line that is the ground at a point with zero disparity in the V-disparity map as a slice parallel to the ground; and

    wherein the step of obtaining the slice U-disparity map comprises projecting all coordinate points, which correspond to the straight line intersecting the straight line that is the ground in the V-disparity map, from the disparity map to the U-disparity map.

2.  The method for detecting a continuous road partition according to claim 1, wherein the step of detecting the continuous road partition based on the slice U-disparity map comprises:

    a step of obtaining a first slant line that intersects the slant line that is the ground at a vertical axis from the V-disparity map as a first slice parallel to the ground; and
    a step of detecting the continuous road partition by detecting a first straight line from the U-disparity map corresponding to the first slice.

3.  The method for detecting a continuous road partition according to claim 2, wherein the step of detecting the continuous road partition based on the slice U-disparity map further comprises:

    a step of obtaining a second slant line that intersects the slant line that is the ground at the vertical axis and is higher than the first slant line from the V-disparity map as a higher slice parallel to the ground; and
    a step of detecting the continuous road partition by detecting a second straight line from the U-disparity map corresponding to the higher slice.

4.  The method for detecting a continuous road partition according to claim 3, further comprising:

    a step of repeating operations of obtaining a slice parallel to the ground and detecting the continuous road partition by detecting a straight line from the U-disparity map corresponding to the slice in an order from lowest to highest height above the ground until no more straight lines can be found as the continuous road partition from the U-disparity map corresponding to a slice, determining a straight line having the most overlapping occurrences among the straight lines detected from the U-disparity maps as the continuous road partition accordingly, and determining the height of the continuous road partition based on the ground and the last slice.

5.  The method for detecting a continuous road partition according to any one of claims 1 to 4,

wherein if a slice perpendicular to the ground is obtained from the disparity map in the position of a straight line detected from the U-disparity map as the continuous road partition, a verification is performed according to the V-disparity map corresponding to the slice based on whether the continuous road partition is represented as upper and lower horizontal lines and a number of vertical lines therebetween and the upper and lower horizontal lines intersect at a point with a zero disparity value in the V-disparity map.

6. The method for detecting a continuous road partition according to any one of claims 1 to 5,
   wherein the slice parallel to the ground has a predetermined thickness.

7. The method for detecting a continuous road partition according to any one of claims 1 to 6, further comprising:

   a step of detecting a plurality of connected line segments having different slopes from the U-disparity map corresponding to the slice parallel to the ground so as to detect a curved continuous road partition.

8. An apparatus for detecting a continuous road partition that is an object with a function for partitioning a road, the continuous road partition having a height based on the ground in a real three-dimensional world, comprising:

   means for obtaining a disparity map including a part of the continuous road partition, a corresponding U-disparity map and a corresponding V-disparity map;
   means for obtaining a straight line in the V-disparity map, which corresponds to a slice parallel to the ground in a real three-dimensional world;
   means for obtaining a U-disparity map corresponding to the slice parallel to the ground as a slice U-disparity map; and
   means for detecting the continuous road partition by detecting a straight line from the slice U-disparity map;
   **characterized in that**
   the means for obtaining a straight line in the V-disparity map, which corresponds to a slice parallel to the ground in a real three-dimensional world, is configured to:

   detect a straight line with the maximum ordinate value in the V-disparity as a slant line that is the ground, and to
   detect a straight line that intersects the slant line that is the ground at a point with zero disparity in the V-disparity map as a slice parallel to the ground; and

   wherein the means for detecting the continuous road partition is configured to obtain the slice U-disparity map by projecting all coordinate points, which correspond to the straight line intersecting the straight line that is the ground in the V-disparity map, from the disparity map to the U-disparity map.

**Patentansprüche**

1. Verfahren zum Erfassen einer kontinuierlichen Straßenteilung, die ein Objekt mit einer Funktion zum Aufteilen einer Straße ist, wobei die kontinuierliche Straßenteilung eine Höhe basierend auf dem Boden in einer realen dreidimensionalen Welt aufweist und sich entlang der Richtung der Straße erstreckt, wobei das Verfahren Folgendes umfasst:

   einen Schritt des Erhaltens einer Disparitätskarte, die einen Teil der kontinuierlichen Straßenteilung umfasst, einer entsprechenden U-Disparitätskarte und einer entsprechenden V-Disparitätskarte; und
   einen Schritt des Erhaltens einer geraden Linie in der V-Disparitätskarte, die einer Scheibe parallel zum Boden in einer realen dreidimensionalen Welt entspricht;
   einen Schritt des Erhaltens einer U-Disparitätskarte, die der Scheibe parallel zum Boden als eine Scheiben-U-Disparitätskarte entspricht, und
   einen Schritt des Erfassens der kontinuierlichen Straßenteilung durch Erfassen einer geraden Linie von der Scheiben-U-Disparitätskarte;
   **dadurch gekennzeichnet, dass**
   der Schritt des Erhaltens einer geraden Linie in der V-Disparitätskarte, die einer Scheibe parallel zum Boden in einer realen dreidimensionalen Welt entspricht, Folgendes umfasst:

   Erfassen einer geraden Linie mit dem maximalen Ordinatenwert in der V-Disparität als eine schräge Linie, die dem Boden entspricht, und

Erfassen einer geraden Linie, die die schräge Linie schneidet, die dem Boden entspricht, an einem Punkt mit null Disparität auf der V-Disparitätskarte als eine parallel zum Boden liegende Scheibe; und wobei der Schritt des Erhaltens der Scheiben-U-Disparitätskarte das Projizieren aller Koordinatenpunkte umfasst, die der geraden Linie entsprechen, die die gerade Linie, die dem Boden auf der V-Disparitätskarte entspricht, schneidet, und zwar von der Disparitätskarte zur U-Disparitätskarte.

2. Verfahren zum Erfassen einer kontinuierlichen Straßenteilung nach Anspruch 1, wobei der Schritt des Erfassens der kontinuierlichen Straßenteilung basierend auf der Scheiben-U-Disparitätskarte Folgendes umfasst:

einen Schritt des Erhaltens einer ersten schrägen Linie, die die schräge Linie, die dem Boden entspricht, an einer vertikalen Achse von der V-Disparitätskarte als eine erste Scheibe parallel zum Boden schneidet; und einen Schritt des Erfassens der kontinuierlichen Straßenteilung durch Erfassen einer ersten geraden Linie von der U-Disparitätskarte, die der ersten Scheibe entspricht.

3. Verfahren zum Erfassen einer kontinuierlichen Straßenteilung nach Anspruch 2, wobei der Schritt des Erfassens der kontinuierlichen Straßenteilung basierend auf der Scheiben-U-Disparitätskarte ferner Folgendes umfasst:

einen Schritt des Erhaltens einer zweiten schrägen Linie, die die schräge Linie, die dem Boden entspricht, an der vertikalen Achse schneidet und höher liegt als die erste schräge Linie von der V-Disparitätskarte, als eine höhere Scheibe parallel zum Boden; und einen Schritt des Erfassens der kontinuierlichen Straßenteilung durch Erfassen einer zweiten geraden Linie von der U-Disparitätskarte, die der höheren Scheibe entspricht.

4. Verfahren zum Erfassen einer kontinuierlichen Straßenteilung nach Anspruch 3, das ferner Folgendes umfasst:

einen Schritt des Wiederholens der folgenden Operationen: Erhalten einer Scheibe parallel zum Boden und Erfassen der kontinuierlichen Straßenteilung durch Erfassen einer geraden Linie von der U-Disparitätskarte, die der Scheibe entspricht, in einer Reihenfolge von der niedrigsten zur höchsten Höhe über dem Boden, bis keine weiteren geraden Linien als die kontinuierliche Straßenteilung von der U-Disparitätskarte, die einer Scheibe entspricht, gefunden werden können, Bestimmen einer geraden Linie, die die am meisten überlappenden Vorkommnisse unter den geraden Linien aufweist, die von den U-Disparitätskarten als die kontinuierliche Straßenteilung entsprechend erkannt wurden, und Bestimmen der Höhe der kontinuierlichen Straßenteilung basierend auf dem Boden und der letzten Scheibe.

5. Verfahren zum Erfassen einer kontinuierlichen Straßenteilung nach einem der Ansprüche 1 bis 4, wobei, wenn eine Scheibe senkrecht zum Boden aus der Disparitätskarte in der Position einer geraden Linie erhalten wird, die von der U-Disparitätskarte als die kontinuierliche Straßenteilung erkannt wird, eine Verifizierung gemäß der V-Disparitätskarte durchgeführt wird, die der Scheibe entspricht, basierend darauf, ob die kontinuierliche Straßenteilung als obere und untere horizontale Linien und eine Anzahl vertikaler Linien dazwischen dargestellt ist und sich die oberen und die unteren horizontalen Linie an einem Punkt mit einem Disparitätswert von null in der V-Disparitätskarte schneiden.

6. Verfahren zum Erfassen einer kontinuierlichen Straßenteilung nach einem der Ansprüche 1 bis 5, wobei die Scheibe parallel zum Boden eine vorbestimmte Dicke aufweist.

7. Verfahren zum Erfassen einer kontinuierlichen Straßenteilung nach einem der Ansprüche 1 bis 6, das ferner Folgendes umfasst:

einen Schritt des Erfassens einer Vielzahl von verbundenen Liniensegmenten mit unterschiedlichen Steigungen von der U-Disparitätskarte, die der parallel zum Boden liegenden Scheibe entsprechen, um eine gekrümmte kontinuierliche Straßenteilung zu erfassen.

8. Vorrichtung zum Erfassen einer kontinuierlichen Straßenteilung, die ein Objekt mit einer Funktion zum Aufteilen einer Straße ist, wobei die kontinuierliche Straßenteilung eine Höhe hat, die auf dem Boden in einer realen dreidimensionalen Welt basiert, wobei die Vorrichtung Folgendes umfasst:

ein Mittel zum Erhalten einer Disparitätskarte, die einen Teil der kontinuierlichen Straßenteilung umfasst, einer entsprechenden U-Disparitätskarte und einer entsprechenden V-Disparitätskarte;

ein Mittel zum Erhalten einer geraden Linie in der V-Disparitätskarte, die einer Scheibe parallel zum Boden in einer realen dreidimensionalen Welt entspricht;

ein Mittel zum Erhalten einer U-Disparitätskarte, die der Scheibe parallel zum Boden als eine Scheiben-U-Disparitätskarte entspricht; und

ein Mittel zum Erfassen der kontinuierlichen Straßenteilung durch Erfassen einer geraden Linie von der Scheiben-U-Disparitätskarte;

**dadurch gekennzeichnet, dass**

das Mittel zum Erhalten einer geraden Linie in der V-Disparitätskarte, die einer Scheibe parallel zum Boden in einer realen dreidimensionalen Welt entspricht, für Folgendes konfiguriert ist:

Erfassen einer geraden Linie mit dem maximalen Ordinatenwert in der V-Disparität als eine schräge Linie, die dem Boden entspricht, und

Erfassen einer geraden Linie, die die schräge Linie schneidet, die dem Boden entspricht, an einem Punkt mit null Disparität auf der V-Disparitätskarte als eine parallel zum Boden liegende Scheibe; und

wobei das Mittel zum Erfassen der kontinuierlichen Straßenteilung dafür konfiguriert ist, die Scheiben-U-Disparitätskarte zu erhalten, indem es alle Koordinatenpunkte projiziert, die der geraden Linie entsprechen, die die gerade Linie, die dem Boden in der V-Disparitätskarte entspricht, schneidet, und zwar von der Disparitätskarte zur U-Disparitätskarte.

## Revendications

1. Procédé de détection d'une séparation de route continue qui correspond à un objet présentant une fonction permettant de séparer une route, la séparation de route continue présentant une hauteur par rapport au sol dans un monde tridimensionnel réel et s'étendant le long de la direction de la route, le procédé comprenant :

une étape consistant à obtenir une carte de disparité incluant une partie de la séparation de route continue, une carte de U-disparité correspondante et une carte de V-disparité correspondante ; et

une étape consistant à obtenir une ligne droite dans la carte de V-disparité, qui correspond à une tranche parallèle au sol dans un monde tridimensionnel réel ;

une étape consistant à obtenir une carte de U-disparité correspondant à la tranche parallèle au sol en tant que carte de U-disparité de tranche ; et

une étape consistant à détecter la séparation de route continue en détectant une ligne droite à partir de la carte de U-disparité de tranche ;

**caractérisé en ce que**

l'étape d'obtention d'une ligne droite dans la carte de V-disparité, qui correspond à une tranche parallèle au sol dans un monde tridimensionnel réel, comprend les étapes ci-dessous consistant à :

détecter une ligne droite présentant la valeur d'ordonnée maximale dans la carte de V-disparité en tant qu'une ligne oblique qui correspond au sol ; et

détecter une ligne droite qui coupe la ligne oblique qui correspond au sol en un point présentant une disparité nulle dans la carte de V-disparité, en tant qu'une tranche parallèle au sol ; et

dans lequel l'étape d'obtention de la carte de U-disparité de tranche comprend l'étape consistant à projeter tous les points de coordonnées, qui correspondent à la ligne droite coupant la ligne droite qui correspond au sol dans la carte de V-disparité, de la carte de disparité vers la carte de U-disparité.

2. Procédé de détection d'une séparation de route continue selon la revendication 1, dans lequel l'étape de détection de la séparation de route continue sur la base de la carte de U-disparité de tranche comprend :

une étape consistant à obtenir une première ligne oblique qui coupe la ligne oblique qui correspond au sol au niveau d'un axe vertical à partir de la carte de V-disparité en tant qu'une première tranche parallèle au sol ; et

une étape consistant à détecter la séparation de route continue en détectant une première ligne droite à partir de la carte de U-disparité correspondant à la première tranche.

3. Procédé de détection d'une séparation de route continue selon la revendication 2, dans lequel l'étape consistant à détecter la séparation de route continue sur la base de la carte de U-disparité de tranche comprend en outre :

une étape consistant à obtenir une seconde ligne oblique qui coupe la ligne oblique qui correspond au sol au niveau de l'axe vertical et qui est plus élevée que la première ligne oblique de la carte de V-disparité en tant que tranche plus élevée parallèle au sol ; et

une étape consistant à détecter la séparation de route continue en détectant une seconde ligne droite à partir de la carte de U-disparité correspondant à la tranche plus élevée.

4. Procédé de détection d'une séparation de route continue selon la revendication 3, comprenant en outre :

une étape consistant à répéter les opérations consistant à obtenir une tranche parallèle au sol et à détecter la séparation de route continue en détectant une ligne droite à partir de la carte de U-disparité correspondant à la tranche dans un ordre allant de la hauteur la plus faible à la plus hauteur la plus élevée au-dessus du sol, jusqu'à ce qu'il ne soit plus possible de trouver des lignes droites en tant que la séparation de route continue à partir de la carte de U-disparité correspondant à une tranche, à déterminer une ligne droite présentant les occurrences les plus en chevauchement parmi les lignes droites détectées à partir de la carte de U-disparités en tant que la séparation de route continue en conséquence, et à déterminer la hauteur de la séparation de route continue sur la base du sol et de la dernière tranche.

5. Procédé de détection d'une séparation de route continue selon l'une quelconque des revendications 1 à 4, dans lequel, si une tranche perpendiculaire au sol est obtenue à partir de la carte de disparité dans la position d'une ligne droite détectée à partir de la carte de U-disparité en tant que la séparation de route continue, une vérification est mise en oeuvre selon la carte de V-disparité correspondant à la tranche, selon que la séparation de route continue est représentée sous la forme de lignes horizontales supérieures et inférieures et d'un nombre de lignes verticales entre elles, et selon que les lignes horizontales supérieures et inférieures se croisent en un point présentant une valeur de disparité nulle dans la carte de V-disparité.

6. Procédé de détection d'une séparation de route continue selon l'une quelconque des revendications 1 à 5, dans lequel la tranche parallèle au sol présente une épaisseur prédéterminée.

7. Procédé de détection d'une séparation de route continue selon l'une quelconque des revendications 1 à 6, comprenant en outre :

une étape consistant à détecter une pluralité de segments de ligne connectés présentant des pentes différentes de la carte de U-disparité correspondant à la tranche parallèle au sol de manière à détecter une séparation de route continue incurvée.

8. Appareil destiné à détecter une séparation de route continue qui correspond à un objet présentant une fonction permettant de séparer une route, la séparation de route continue présentant une hauteur par rapport au sol dans un monde tridimensionnel réel, comprenant :

un moyen pour obtenir une carte de disparité incluant une partie de la séparation de route continue, une carte de U-disparité correspondante et une carte de V-disparité correspondante ;
un moyen pour obtenir une ligne droite dans la carte de V-disparité, qui correspond à une tranche parallèle au sol dans un monde tridimensionnel réel ;
un moyen pour obtenir une carte de U-disparité correspondant à la tranche parallèle au sol en tant que carte de U-disparité de tranche ; et
un moyen pour détecter la séparation de route continue en détectant une ligne droite à partir de la carte de U-disparité de tranche ;
**caractérisé en ce que**
le moyen d'obtention d'une ligne droite dans la carte de V-disparité, qui correspond à une tranche parallèle au sol dans un monde tridimensionnel réel, est configuré de manière à :

détecter une ligne droite présentant la valeur d'ordonnée maximale dans la carte de V-disparité, en tant qu'une ligne oblique qui correspond au sol ; et
détecter une ligne droite qui coupe la ligne oblique qui correspond au sol en un point présentant une disparité nulle dans la carte de V-disparité, en tant qu'une tranche parallèle au sol ; et

dans lequel le moyen de détection de la séparation de route continue est configuré de manière à obtenir la carte de U-disparité de tranche en projetant tous les points de coordonnées, qui correspondent à la ligne droite coupant la ligne droite qui correspond au sol dans la carte de V-disparité, de la carte de disparité vers la carte de U-disparité.

FIG.1

# FIG.2

# FIG.3

0       D-AXIS

Y-
AXIS

0       X-AXIS

D-AXIS

# FIG.4

SHIELDING

SHIELDING

# FIG.5

START

OBTAINING DISPARITY MAP INCLUDING PART OF CONTINUOUS ROAD PARTITION, CORRESPONDING U-DISPARITY MAP AND CORRESPONDING V-DISPARITY MAP — S110

DETECTING CONTINUOUS ROAD PARTITION, BASED ON U-DISPARITY MAP CORRESPONDING TO SLICE PARALLEL TO THE GROUND — S120

END

# FIG.6

# FIG.7

# FIG.8

START

OBTAINING DISPARITY MAP INCLUDING PART OF CONTINUOUS ROAD PARTITION, CORRESPONDING U-DISPARITY MAP AND CORRESPONDING V-DISPARITY MAP ⟩— S210

OBTAINING FIRST SLANT LINE THAT INTERSECTS SLANT LINE THAT IS THE GROUND AT VERTICAL AXIS FROM V-DISPARITY MAP, AS FIRST SLICE PARALLEL TO THE GROUND ⟩— S220

DETECTING CONTINUOUS ROAD PARTITION BY DETECTING FIRST STRAIGHT LINE FROM U-DISPARITY MAP CORRESPONDING TO FIRST SLICE ⟩— S230

OBTAINING SECOND SLANT LINE THAT INTERSECTS SLANT LINE THAT IS THE GROUND AT VERTICAL AXIS AND IS HIGHER THAN FIRST SLANT LINE FROM V-DISPARITY MAP, AS A HIGHER SLICE PARALLEL TO THE GROUND ⟩— S240

DETECTING CONTINUOUS ROAD PARTITION BY DETECTING SECOND STRAIGHT LINE FROM U-DISPARITY MAP CORRESPONDING TO THE HIGHER SLICE ⟩— S250

END

# FIG.9

# FIG.10

```
                    ┌─────────────┐
                    │    START    │
                    └──────┬──────┘
                           │
                           ▼
   ┌───────────────────────────────────────────┐
   │  OBTAINING DISPARITY MAP INCLUDING         │
   │  PART OF CONTINUOUS ROAD PARTITION,        │──── S310
   │  CORRESPONDING U-DISPARITY MAP AND         │
   │  CORRESPONDING V-DISPARITY MAP             │
   └───────────────────────┬───────────────────┘
                           │
                           ▼
   ┌───────────────────────────────────────────┐
   │  DETECTING CONTINUOUS ROAD PARTITION,      │
   │  BASED ON U-DISPARITY MAP                  │──── S320
   │  CORRESPONDING TO SLICE PARALLEL TO        │
   │  THE GROUND                                │
   └───────────────────────┬───────────────────┘
                           │
                           ▼
   ┌───────────────────────────────────────────┐
   │  OBTAINING SLICE PERPENDICULAR TO THE      │
   │  GROUND FROM DISPARITY MAP, IN             │
   │  POSITION OF STRAIGHT LINE DETECTED        │──── S330
   │  FROM U-DISPARITY MAP AS CONTINUOUS        │
   │  ROAD PARTITION                            │
   └───────────────────────┬───────────────────┘
                           │
                           ▼
   ┌───────────────────────────────────────────┐
   │  VERIFYING BASED ON PROPERTY OF            │
   │  CONTINUOUS ROAD PARTITION IN              │──── S340
   │  V-DISPARITY MAP, IN V-DISPARITY MAP       │
   │  CORRESPONDING TO SLICE                    │
   └───────────────────────┬───────────────────┘
                           │
                           ▼
                    ┌─────────────┐
                    │     END     │
                    └─────────────┘
```

FIG.11

FIG.12

# FIG.13

DISPARITY MAP AND
U-DISPARITY MAP AND
V-DISPARITY MAP
OBTAINING UNIT
~8100

DETECTING UNIT
~8200

# FIG.14

INPUT
APPARATUS
~1100

PROCESSING
APPARATUS
~1200

OUTPUT
APPARATUS
~1300

STORAGE
APPARATUS
~1400

~1000

## REFERENCES CITED IN THE DESCRIPTION

**Non-patent literature cited in the description**

- **GIANCARLO ALESSANDRETTI ; ALBERTO BROGGI ; PIETRO CERRI et al.** Vehicle and Guard Rail Detection Using Radar and Vision Data Fusion. *IEEE 2007 TRANSACTIONS ON INTELLIGENT TRANSPORTATION SYSTEMS*

- **ZHENCHENG HU ; FRANCISCO LAMOSA ; KEI-ICHI UCHIMURA.** A Complete U-V-Disparity Study for Stereovision Based 3D Driving Environment Analysis. *Proceedings of the Fifth International Conference on 3-D Digital Imaging and Modeling 2005*